# EUROPEAN PATENT APPLICATION

(11) **EP 2 184 617 A2**
(43) Date of publication of application: **12.05.2010**
(21) Application number: 09175017.4
(22) Date of filing: 04.11.2009
(51) Int. Cl.: G01S 19/25, G01S 5/00

(54) **Position locating method and system using secure user plane location**

(30) Priority: 06.11.2008 KR 20080109883
(71) Applicant: SAMSUNG ELECTRONICS CO., LTD., Suwon-si, Gyeonggi-do (KR)
(72) Inventor: Park, Jun Ho, Suwon-si, Gyeonggi-do (KR); Jun, Hae Young, Suwon-si, Gyeonggi-do (KR)
(74) Representative: Ketelaars, Maarten F.J.M.

(57) **Abstract**

A position locating method and system for locating a position of a mobile terminal using Secure User Plane Location (SUPL). A position locating method using Secure User Plane Location (SUPL) according to an exemplary embodiment of the present invention preferably includes receiving, at a target SUPL Enabled Terminal (SET), a SET list from an SUPL Location Platform (SLP); receiving an assistance data from a SET selected among SETs listed in the SET list; and location a position of the target set using the assistance data. A position locating method using Secure User Plane Location (SUPL) according to another exemplary embodiment of the present invention includes requesting, at a target SUPL Enabled Terminal (SET), at least one SET to send assistant data; receiving the assistant data from one of the least SET; and locating a position of the target SET based on the assistant data.

## Description

### BACKGROUND OF THE INVENTION

### Field of the Invention

The present invention relates to a position locating technology. More particularly, the present invention relates to a position locating method and system for locating a position of a mobile terminal using Secure User Plane Location (SUPL).

### Description of the Related Art

Secure User Plane Location (SUPL) is a specification developed by the Location Working Group of Open Mobile Alliance (OMA) to support Location-Based Services (LBS) for wireless communication and to develop specifications to ensure interoperability of Mobile Location Services on an end-to-end basis. Basic SUPL architecture is composed of a SUPL Enable Terminal (SET) as a mobile terminal and a SUPL Location Platform (SLP) as a server, and the SUPL specifies the interface between a target SET and SLP, i.e. the position determination sequence conducted and messages exchanged between the target SET and SLP. OMA Release Definition for Secure UserPlane for Location (SUPL), Candidate Version 2.0, June 27, 2008 is incorporated by reference in its entirety as background material.

In order to locate a mobile terminal, various technologies can be used in the plurality of mobile communication systems. Standalone Global Positioning System (GPS) and Standalone Global Navigation Satellite System (GNSS) are two well-known positioning systems that can be used, for example. The mobile terminal equipped with the Standalone GPS receiver or Standalone GNSS receiver works best in open areas that offer unobstructed line of sight to the GPS satellites. However, such mobile terminals are likely to experience long delays to acquire GPS data in places where the GPS signals are weak. Assisted GPS (A-GPS) and Assisted GNSS (A-GNSS) are technologies developed to overcome the shortcomings of those traditional systems. The A-GPS or A-GNSS enabled mobile terminal can compute its position more quickly than the traditional GPS with assistance data received from a SLP through a wireless network.

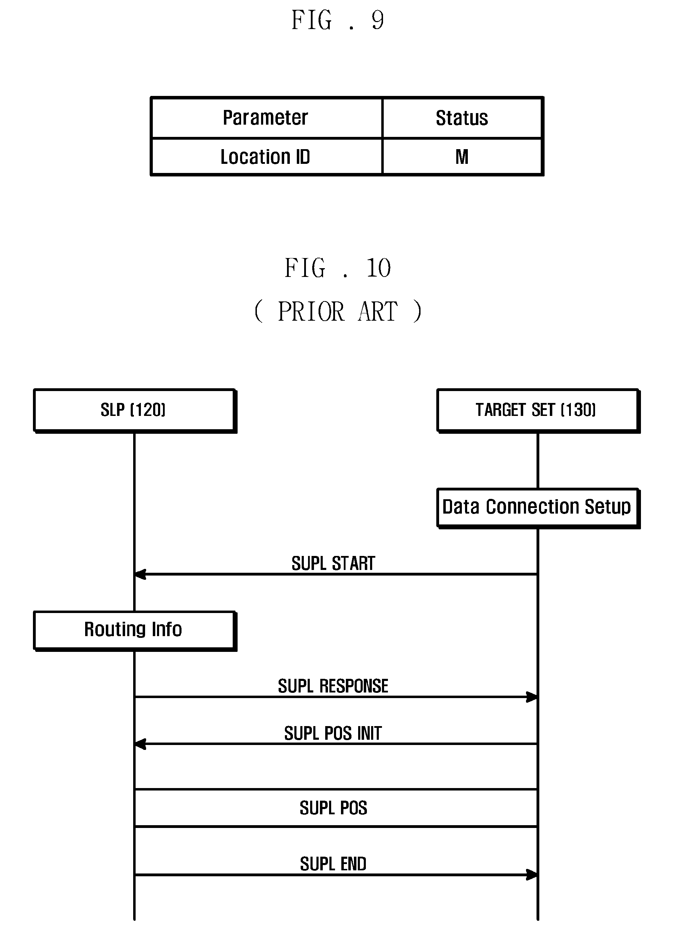

FIG. 10 is a sequence diagram illustrating a conventional position locating method using SUPL.

First of all, a target SET 130 performs a data connection setup procedure and then sends an SUPL START message to an SLP 120 to initiate a position locating procedure. The SUPL START message contains information related to the positioning method and protocol. Upon receipt of the SUPL START message, the SLP 120 checks whether the target SET is currently roaming (based on the Routing Information). Next, the SLP 120 selects a supportable positioning method and protocol and sends a SUPL RESPONSE message containing the information on the supportable positioning method and protocol. If the SUPL RESPONSE message is received by the target SET 130, then the target SET 130 sends an SUPL POS INIT message to the SLP 120 to initiate the position locating procedure. As a consequence, the server and the target SET exchange positioning procedure messages to determine the position. Once the position calculation is completed, the SLP 120 sends a SUPL END message to the target SET 130 to inform f the location session has ended.

In the conventional position locating method using SUPL, the target SET 130 and the SLP 120 exchange SUPL procedure messages and the SLP 120 is involved in position determination procedure. Accordingly, if the position location is frequently requested by a plurality of target SETs, the SLP 120 is likely to be overloaded. In this case, the position locating procedure can be delayed, resulting in user inconvenience. In order to provide the user with reliable location service, such processing overload must be distributed by increasing a number of SLPs. However, such costly facility expansion cannot be the best solution for the network operators. There is therefore a need to develop a position locating method using SUPL that prevents the SLP from being overloaded or locating the position of a mobile terminal without assistance of the SLP.

### SUMMARY OF THE INVENTION

The present invention provides a method and system for locating the position of a mobile terminal using SUPL that reduces the load of an SLP.

Also, the present invention provides a system and method for locating the position of a mobile terminal using SUPL that locates the position of a mobile terminal without the assistance of an SLP.

Also, the present invention provides a system and method for locating the position of a mobile terminal using SUPL that prevents the SLP from being overloaded without increasing a number of SLPs.

Furthermore, the present invention provides a system and method for locating the position of a mobile terminal using SUPL that improves the position locating performance without deployment of an SLP.

In accordance with an exemplary embodiment of the present invention, a position locating method using Secure User Plane Location (SUPL) preferably includes receiving, at a target SUPL Enabled Terminal (SET), a SET list from an SUPL Location Platform (SLP); receiving an assistance data from a SET selected among SETs listed in the SET list; and location a position of the target set using the assistance data.

Preferably, in an exemplary aspect of the invention, receiving a SET list can include sending a SET list request message from the target SET to the SLP; and receiving a SET list response message containing transmutability of the SET list and the SET list which is transmitted by the SLP in response to the SET list request message.

Preferably, in an exemplary aspect of the invention, receiving an assistance data can include sending an SUPL SET-TO-SET (STS) START message requesting participation in a SET-TE-SET location session to at least one of the SETs listed in the SET list; determining, at each SET received the SUPL STS START message, whether the SET can provide the target SET with the assistance data; performing, at the SET that can provide the assistance data, a data connection setup procedure; transmitting the assistance data from the SET performed the data connection setup to the target SET.

Preferably, in an exemplary aspect of the invention, performing a data connection setup can include connecting the SET received the SUPL STS START message to the target SET using the IP information and the port information of the target SET.

In accordance with another exemplary embodiment of the present invention, a position locating method using Secure User Plane Location (SUPL) includes requesting, at a target SUPL Enabled Terminal (SET), at least one SET to send assistant data; receiving the assistant data from said at least one SET; and locating a position of the target SET based on the assistant data.

In accordance with another exemplary embodiment of the present invention, a position locating system using Secure User Plane Location (SUPL) preferably includes an SUPL Location Platform (SLP) for providing a SUPL Enabled Terminal (SET) list; a first SET for sending a SET list request message, and for receiving an assistance data from at least one SET listed in the SET list, and for locating a position of the first SET based on the assistance data; and a second SET which performs a data connection setup to the first SET and sends the assistance data to the first SET.

In accordance with still another exemplary embodiment of the present invention, a position locating system using Secure User Plane Location (SUPL) preferably includes a first SUPL Enabled Terminal (SET) which requests at least one SETs for assistance data, receives the assistance data, and locates a location of the first SET based on the assistance data; and a second SET which performs a data connection setup to the first SET and sends the assistance data to the first SET.

In addition, a person of ordinary skill in the art should understand that that certain expressions and the reference signs of Rule 6.2(b) PCT that may be used in the claims do not limit their scope.

### BRIEF DESCRIPTION OF THE DRAWINGS

The above and other exemplary objects, features and advantages of the present invention will become more apparent from the following detailed description in conjunction with the accompanying drawings, in which:
FIG. 1 is a schematic diagram illustrating a position locating system using SUPL according to a first exemplary embodiment of the present invention;
FIG. 2 is a schematic diagram illustrating a position locating system using SUPL according to a second exemplary embodiment of the present invention;
FIG. 3 is a sequence diagram illustrating a position locating method using SUPL according to the first exemplary embodiment of the present invention;
FIG. 4 is a sequence diagram illustrating a position locating method using SUPL according to the second exemplary embodiment of the present invention;
FIG. 5 is a table illustrating a format of a SUPL SET LIST REQ message for use in a position locating method according to an exemplary embodiment of the present invention;
FIG. 6 is a table illustrating a format of a SUPL SET LIST RESPONSE message for use in a position locating method according to an exemplary embodiment of the present invention;
FIG. 7 is a table illustrating a format of a SUPL STS START message for use in a position locating method according to an exemplary embodiment of the present invention;
FIG. 8 is a table illustrating a format of a SUPL STS RESPONSE message for use in a position locating method according to an exemplary embodiment of the present invention;
FIG. 9 is a table illustrating a format of a SUPL STS POS INIT message for use in a position locating method according to an exemplary embodiment of the present invention; and
FIG. 10 is a sequence diagram illustrating a conventional position locating method using SUPL.

### DETAILED DESCRIPTION

In the following description, the term 'assistance data' typically refers to the data which an SUPL Enabled Terminal (SET) receives from a SUPL Location Platform (SLP). In the Assisted Global Positioning System (A-GPS) or Assisted Global Navigation Satellite System (A-GNSS), the 'assistance data' contains satellite-related information including compensation parameters (such as Pseudorandom Noise (PRN) number, Ephemeris data, clock error correction, and ionosphere correction), GPS signal Doppler information, and phase information.

Exemplary embodiments of the present invention will now be described with reference to the accompanying drawings in more detail. The same reference numbers are used throughout the drawings to refer to the same or like parts. Detailed descriptions of well-known functions and structures incorporated herein may be omitted to avoid obscuring appreciation of the subject matter of the present invention by a person of ordinary skill in the art.

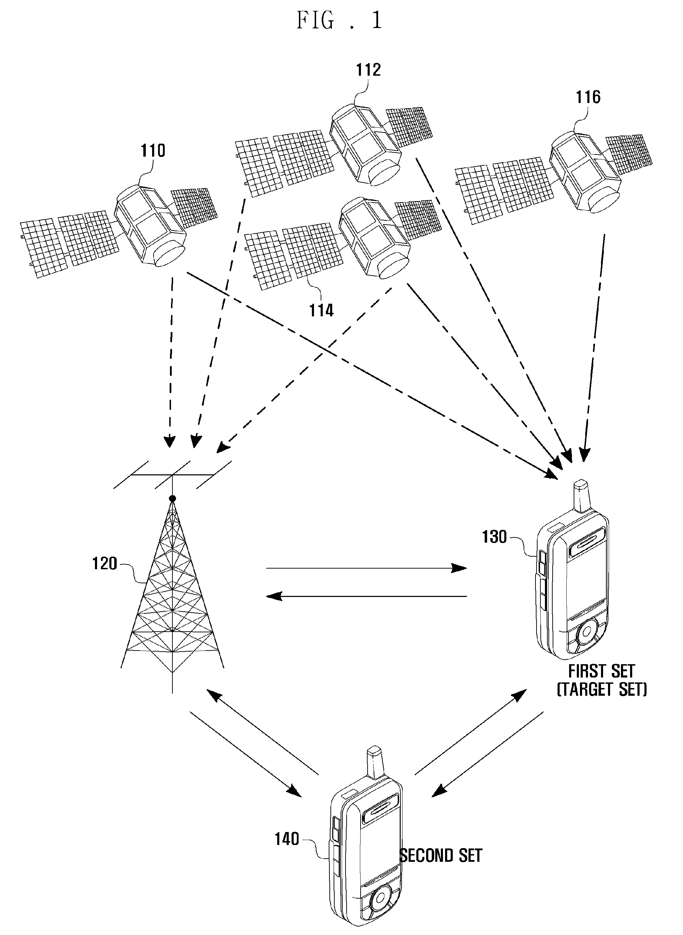

FIG. 1 is a schematic diagram illustrating a position locating system using SUPL according to a first exemplary embodiment of the present invention.

According to the first exemplary embodiment of the present invention, the position locating system using SUPL preferably includes a plurality of GPS satellites 110, 112, 114, and 116, an SLP 120, a first SET 130, and a second SET 140.

The GPS satellites 110 to 116 transmit GPS signals to the first and second SETs 130 and 140. The first and second SETs 130 and 140 locate their positions using the assistance data received from the SLP 120 and the GPS signals received from the GPS satellites 110 to 116.

With continued reference to FIG. 1, the SLP 120 communicates with the first and second SETs 130 and 140 via a mobile communication network. In an exemplary embodiment of the present invention, the SLP 120 preferably receives a SET list request (SUPL SET LIST REQ) message transmitted by the first SET 130 and sends a SET list response (SUPL SET LIST RESPONSE) message containing the SET list to the first SET 130 in response to the SET LIST REQ message. In an exemplary embodiment of the present invention, the SLP 120 has the information related to the SETs of regarding previously-located positions and creates the SET list with the SETs that are located within a threshold distance from the first SET 130, and of which position-located times are within a threshold validity time among the SETs using the same position method as the first SET 130. The SLP 120 estimates a coarse position for the first SET 130 based on a location ID contained in the SET LIST REQ message. Here, the location ID can include, for example, a cell ID of the network, Wireless Local Area Network Access Point (WLAN AP) information, and Worldwide Interoperability for Microwave Access (WiMAX) base station information.

The first SET 130 comprises a target SET of which its position is desired to be located. In this example, the terms "Target Set" and "First Set" may be used interchangeably, as shown in FIG. 1. In order to locate the position of the first SET, the first SET 130 sends the SET LIST REQ message to the SLP 120. If the SET LIST RESPONSE message containing the SET list is received from the SLP 120, the first SET 130 selects one of the SETs from the SET list and sends an SUPL STS START message to the selected SET. In the example of FIG. 1, it is assumed that the second SET 140 is selected from the SET list. The first SET 130 sends the SUPL STS START message, which may be, for example, a Wireless Application Protocol (WAP) Push message or a Short Message Service (SMS) message, just to name a few possible non-limiting examples. In an exemplary embodiment of the present invention, the SUPL STS START message contains an SPL mode, a location ID of the first SET 130, a positioning method, and IP and Port information parameters. If the assistance data is received from the second SET 140, the first SET 130 calculates its position based on the assistance data. Once the position calculation is completed, the first SET 130 sends an SUPL END message to the second SET 140.

The second SET 140 comprises a SET that transmits the assistance data to the target SET (in this case First SET) 130. The second SET 140 receives the SUPL STS START message containing the SLP mode, the location ID of the first SET 130, the positioning method, and the IP and PORT parameters from the first SET 130. In case that the SUPL location session has been started before the SUPL STS START message is received from the first SET 130, the second SET 140 has valid assistance data. In an exemplary embodiment of the present invention, the valid assistance data refers to the assistance data before the threshold validity time expires after the location session starts. If the SUPL STS START message is received from the first SET 130, the second SET 140 determines whether the assistance data is valid for the first SET 130. If it is determined that the assistance data is valid for the first SET 130, the second SET 140 establishes a data connection with the first SET 130 and sends the assistance data to the first SET 130. Upon receipt of the assistance data, the first SET 130 locates its position based on the assistance data received from the second SET 140.

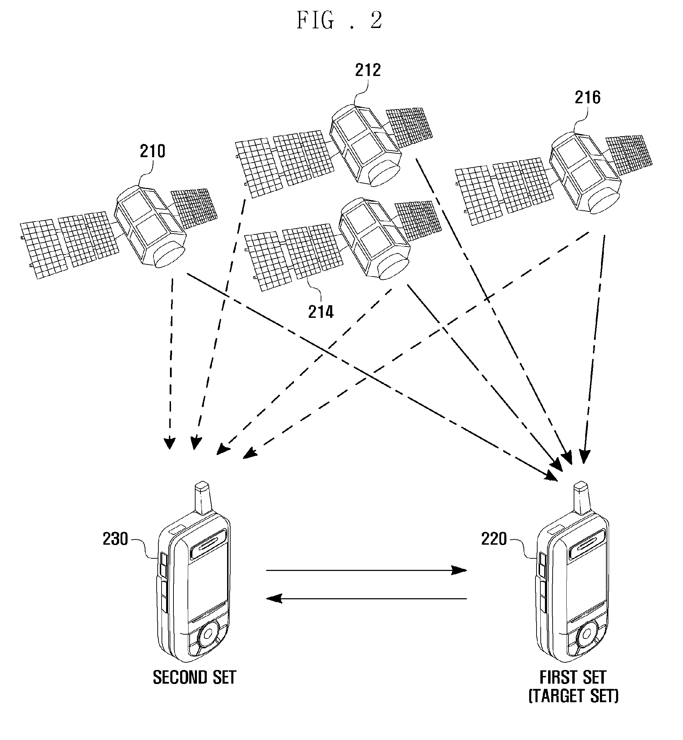

FIG. 2 is a schematic diagram illustrating a position locating system using SUPL according to a second exemplary embodiment of the present invention.

According to the second exemplary embodiment of the present invention, the position location system using SUPL preferably includes a plurality of satellites 210, 212, 214, and 216, a first SET 220, and a second SET 230.

The GPS satellites 210 to 216 transmit GPS signals to the first and second SETs 220 and 230. The first and second SETs 220 and 230 locate their positions using the GPS signals received from the GPS satellites 210 to 216.

The first SET 220 is a target SET having a position that is desired to be located. In order to locate its position, the first SET 220 sends the SUPL STS START message to the SETs selected by the user. The SUPL STS START message can be a Short Message Service (SMS) message or a Wireless Application Protocol (WAP) Push message. In an exemplary embodiment of the present invention, the SUPL STS START message preferably contains an SPL mode, a location ID of the first SET 130, a positioning method, and IP and Port information parameters. The first SET 220 receives an SUPL STS RESPONSE message from one of the SETS to which the SUPL STS START messages are transmitted. In case that the SUPL STS RESPONSE message is received from multiple SETs, the first SET 220 performs the location session with the SET from which the SUPL STS RESPONSE is received first, and releases the connections with the other SETs by transmitting the SUPL END message. In the example of FIG. 2, the second SET 230 sends the SUPL STS RESPONSE message first among the SETs received the SUPL STS START message transmitted by the first SET 220. The first SET 220 receives the assistance data from the second SET 230 and locates its position based on the assistance date transmitted by the second SET 230. Once the position of the first SET 220 is located successfully, the first SET 220 sends the SUPL END message to the second SET 230.

The second SET 230 is the set that transmits the assistance data to the first SET 220. The second SET 230 receives the SUPL STS START message containing an SPL mode, a location ID of the first SET 130, a positioning method, and IP and Port information parameters. In case that the SUPL location session has been started before the SUPL STS START message is received from the first SET 220, the second SET 230 has valid assistance data. Once the SUPL STS START message is received, the second SET 230 determines whether the assistance data is valid for the first SET 220. If it is determined that the assistance data is valid for the first SET 220, the second SET 230 establishes a data connection with the first SET 220 and sends the assistance data to the first SET 220. Upon receipt of the assistance data, the first SET 220 locates its position based on the assistance data received from the second SET 230.

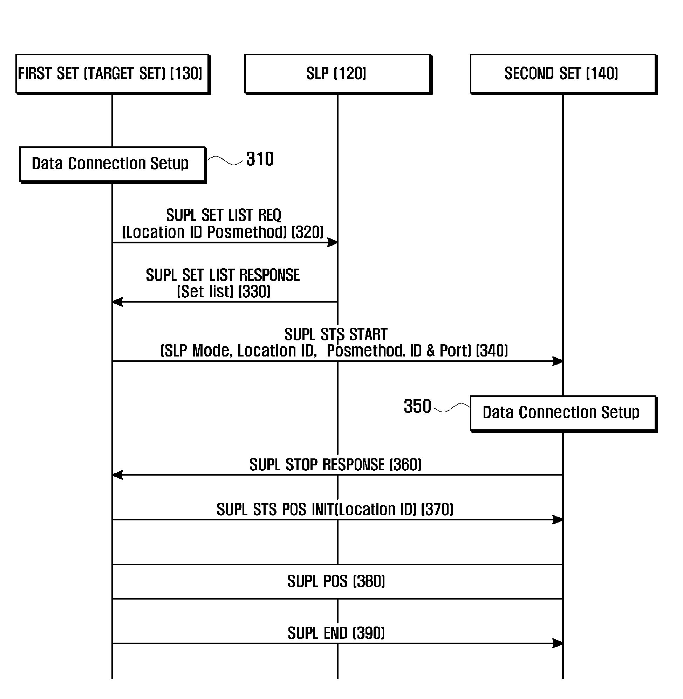

FIG. 3 is a sequence diagram illustrating a position locating method using SUPL according to the first exemplary embodiment of the present invention shown in FIG. 1.

Referring now to FIG. 3, the first SET 130, as the target SET, performs a data connection setup to request the SLP 120 for a SET List (310). The first SET 130 requests the SLP 120 to send an SET List by transmitting an SUPL SET LIST REQ message to the SLP 120 (320). The SET List is a list of information on the SETs that are located in the threshold distance from the first SET 130 and of which position-located times are in the threshold validity time among the SETs using the same position method as the first SET 130. The threshold validity time is used to determine the validity of the assistance data. The validity of the assistance data expires when the threshold validity time has elapsed as measured from the end of the location session of the corresponding SET. Accordingly, only the SETs to which the threshold validity time has not expired yet are storing valid assistance data and thus included in the SET list. In an exemplary embodiment of the present invention, the threshold distance comprises a distance to determine the closeness (proximity) to the first SET 130. The SETS included in the SET List are the SETs close to the first SET 130 within the threshold distance.

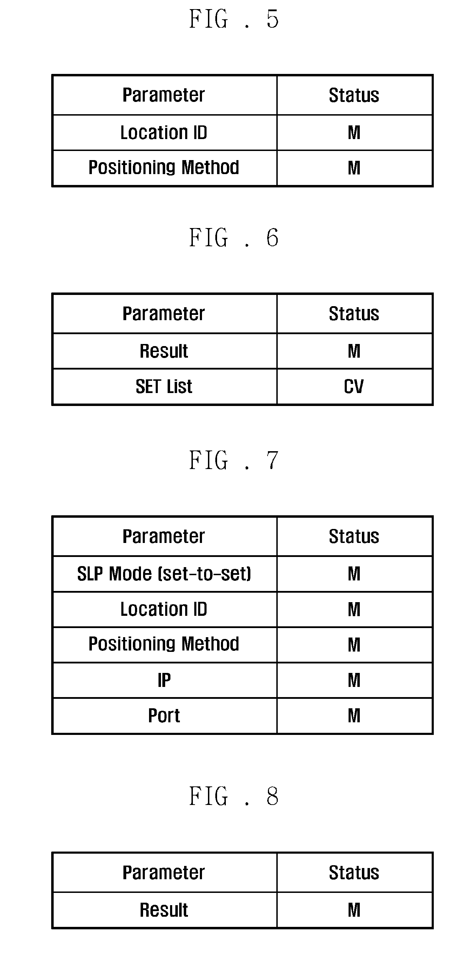

The SUPL SET LIST REQ message is formatted as shown in FIG. 5. The SUPL SET LIST REQ message includes a location ID and a positioning method as the mandatory information. In FIG. 5, the alphabet 'M' of the status column indicates that the parameter on the same row in the parameter column is mandatory information. In an exemplary embodiment of the present invention, it is preferred that the position method of the first SET 130 used comprises the A-GPS or A-GNSS. However, the present invention is not limited thereto but can be applied to other positioning methods such as WiFi Positioning system and Cell ID position system, just to name a few possible examples.

If the SUPL SET LIST REQ message is received by the SLP 120, then in response the SLP 120 sends a SUPL SET LIST RESPONSE message containing the SET List to the first SET 130 (330). The SLP 120 has finished the location sessions with other SETs and recorded the information on the located SETs. The SLP 120 selects the SETs close to the first SET 130 among the previously located SETs as neighbor SETs and then selects the SETs of which threshold validity time has not expired among the neighbor SETs as available SETs.

When creating the SET List, the SLP 120 estimates the coarse position of the first SET 130 using a location ID. The location ID can be a Cell ID of a mobile communication network, Access Point (AP) information of a Wireless Local Area Network (WLAN), or base station information of a Worldwide Interoperability for Microwave Access (WiMAX) network. Here, the mobile communication network may comprises, for example, any of a General System for Mobile communications (GSM), a Code Division Multiple Access (CDMA), and a Universal Mobile Telecommunications System (UMTS), just to name a few non-limiting examples. The SLP 120 estimates the coarse position of the first SET 130 using the location ID contained in the SUPL SET LIST REQ message transmitted by the first SET 130, and then selects the available SETs within the threshold distance from the first SET 130.

The SLP 120 creates an SET list with the SETs with are previously located around the first 130 and of which threshold validity times have not expired yet and sends the SUPL SET LIST RESPONSE message containing the SET list to the first SET 130. The SUPL SET LIST RESPONSE message is formatted as shown in FIG. 6. In FIG. 6, the SUPL SET LIST RESPONSE message includes parameters of Result and SET List. In case that any neighbor SET located previously or any available SET (the neighbor SET of which threshold validity time has not expired) is found in the SET list creation process, the SLP 120 cannot transmit a SET list. In this particular case, the SLP 120 sends the first SET 130 the SUPL SET LIST RESPONSE message having the Result parameter of which the status is set to 'False'.

Only when the available SETs around the first SET exist, the SLP 120 can send the SET list to the first SET 130. In this case, the Result parameter of the SUPL SET LIST RESPONSE message is set to 'True'.

If the SET list is received from the SLP 120, the first SET 130 displays the SET list on a display screen such that the user can select one of the SETs listed in the SET list. Once a SET is selected by the user, the first SET 130 sends a SUPL STS START message to the selected SET (340). In the example of FIG. 3, it is assumed that the second SET 140 is selected by the user. The SUPL STS START message transmitted from the first SET 130 to the second SET 140 can be, for example a Short Message Service (SMS) message or a Wireless Application Protocol (WAP) Push message, just to name a few possibilities.

The SUPL STS START message is preferably formatted as shown in FIG. 7. The SUPL STS START message includes parameters of SLP mode, Location ID, Positioning Method, IP, and Port, and all these parameters are mandatory.

The SLP Mode can be set to one of, for example, Proxy Mode, Non-Proxy Mode, and SET-TO-SET Mode. The SLP 120 is composed of a SUPL Positioning Center (SPC) which is responsible for position computation and an SUPL Location Center (SLC) which is responsible for roaming and resource management. The SET communicates with the SLC directly in Non-Proxy mode, but when there is a data to be exchanged between the SPC and SET, the SLC relays the data between the SPC and SET in Proxy Mode.

The SET-TO-SET mode comprises an SLP mode in which the SLP is not involved in the SET location session. In the example of FIG. 7, the SLP mode is set to SET-TO-SET mode.

The SUPL STS START message also contains the Location ID of the first SET 130 with which the coarse position of the first SET 130 can be obtained and the Positioning Method to be used. The SUPL STS START message also contains the IP and Port information. If the second SET 140 received the SUPL STS START message has completed the data connection setup, the first SET 130 creates a server socket to receive a connection request.

Upon receipt of the SUPL STS START message from the first SET 130, the second SET 140 checks the SUPL STS START message and determines whether the second SET 140 can provide the first SET 130 with assistance data. The SET list provided by the SLP 120 may include SETs than cannot provide the assistance data. Accordingly, the second SET 140 that received the SUPL STS START message should check as to whether it can provide the assistance data.

If it is determined that the second SET 140 can provide the assistance data to the first SET 130, the second SET 140 establishes a data connection with the first SET 130 by referencing the IP and Port information contained in the SUPL STS START message. Otherwise, if it is determined that the second SET 140 cannot provide the assistance data to the first SET 130 or the assistance data transmission is blocked by the user of the second SET 140, the second SET 140 does not send a response message.

If a data connection is established between the first SET 130 and the second SET 140, the second SET 140 preferably sends an SUPL STS RESPONSE message to the first SET 130 to respond with the participation in the SET-TO-SET location session (360). The SUPL STS RESPONSE message is formatted as shown in FIG. 8. In FIG. 8, the SUPL STS RESPONSE message contains only the result parameter indicating whether to participate in the SET-TO-SET location session.

With continued reference to FIG. 3, if the SUPL STS RESPONSE message, which indicates whether to participate in the location session, is received from the second SET 140, the first SET 130 sends a SUPL STS POS INIT message to the second SET 140 (370). The SUPL STS POS INIT message is a message indicating the initiation of the SET-TO-SET location session. The SUPL STS POS INIT message is formatted as shown in FIG. 9. In FIG. 9, the SUPL STS POS INIT message contains only a parameter of Location ID which is used for obtaining the coarse position of the first SET 130.

Upon receipt of the SUPL STS POS INIT message (at 370), the second SET 140 sends an SUPL POS message containing the assistance data to the first SET 130 (380). Once the SUPL POS message is received, the first SET 130 calculates its position using the assistance data contained in the SUPL POS message.

Finally, at (390), the first SET 130 sends an SUPL END message to the second SET 140 to terminate the SET-TO-SET location session.

In the first exemplary embodiment of the present invention, steps 370 and 380 can be omitted. That is, in case when the first SET 130 sends the second SET 140 the SUPL STS START message (containing the SLP mode, Location ID of the first SET 130, Positioning Method, and IP and Port information) and the second SET 140 checks the SUPL STS START message and determines that it can provide the assistance data to the first SET 130, the second SET 140 performs the data connection setup (350) and then sends the SUPL STS RESPONSE message containing the assistance data (360). Upon receipt of the SUPL STS RESPONSE message, the first SET 130 calculates its position using the assistance data extracted from the SUPL STS RESPONSE message and sends the SUPL END message to the second SET 140 to finish the location session (390).

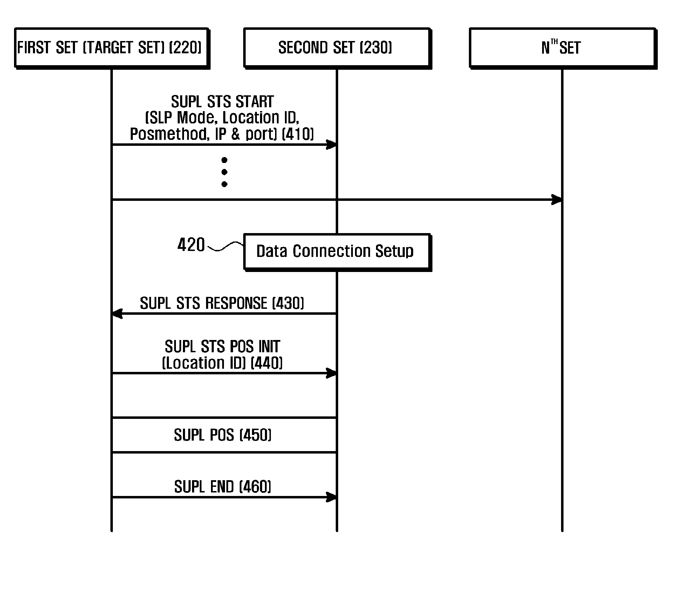

FIG. 4 is a sequence diagram illustrating a position locating method using SUPL according to the second exemplary embodiment of the present invention, an example of which is shown in FIG. 2.

Referring now to FIG. 4, with the first SET 220 as the target SET sends a SUPL STA START message to at least one SET (410). The user of the first SET 220 references a database such as address book stored its storage and sends the SUPL STS START message to the SETs that seem to be positioned near its position. The SUPL STS START message can be transmitted to one or more SETs. The SUPL STS START message can be a Short Message Service (SMS) message or a Wireless Application Protocol (WAP) Push message.

The SUPL STS START message is preferably formatted for this example as shown in FIG. 7. The SUPL STS START message contains parameters including SLP mode, Location ID, Positioning Method, and IP and Port information, and it is important to include all of these parameters in this example. In the example of FIG. 7, the SLP Mode is set to SET-TO-SET Mode.

The SUPL STS START message transmitted by the first SET 220 contains the Location ID that can be used to estimate the coarse position of the first SET 220 and the Position Method to be used in the location session. The SUPL STS START message also contains the IP and Port information of the first SET 220. After transmitting the SUPL STS START message to at least one neighbor SET, the first SET 220 creates a server socket to receive the connection request from the at least one neighbor SET.

The neighbor SET (in this case can be second set 230, as an example) received the SUPL STS START message transmitted by the first SET 220 and checks whether he first SET 220 can be provided with the assistance data. In case that it has been located before receiving the SUPL STS START message and its threshold validity time has not expired, the neighbor SET 230 can provide the first SET 220 with the assistance data. If it is determined that the neighbor SET can provide the first SET 220 with the assistance data, it performs a data connection setup procedure (420) using the IP and Port information contained in the SUPL STS START message received from the first SET 220. Otherwise, if it is determined that the neighbor set cannot provide the assistance data, or the user of the neighbor SET blocks transmission of the assistance data to the first SET 220, the neighbor SET 230 does not send the assistance data.

Once at least one neighbor SET 230 establishes a data connection with the first SET 220, at (430) the neighbor SET 230 sends an SUPL STS RESPONSE message to the first SET 220 in response to the SUPL STS START message. The SUPL STS RESPONSE message is preferably formatted, for example, as shown in FIG. 8. In the example of FIG. 8, the SUPL STS RESPONSE message contains the Result parameter indicating whether to participate in the SET-TO-SET mode location session. The first SET 220 progresses the location session with one neighbor SET and thus sends a SUPL STS POS INT message to the neighbor SET that has transmitted the SUPL STS RESPONSE first among the neighbor SETs received the SUPL STS START message. In FIG. 4, it is assumed that the second SET 230 has sent first the SUPL STS RESPONSE message to the first SET 220. Upon receipt of the SUPL STS RESPONSE message from the second SET 230, the first SET 220 sends a SUPL END message to the other neighbor SETs to release the data connections.

If the SUPL STS RESPONSE message is received from the second SET 230, the first SET 220 sends a SUPL STS POS INIT message to the second SET 230 (440). The SUPL STS POS INIT message is a message indicating the initiation of the SET-TO-SET location session and formatted as shown in FIG. 9. In the example of FIG. 9, the SUPL STS POS INIT message contains only the Location ID parameter which allows estimating a coarse position of the first SET 220.

Upon receipt of the SUPL STS POS INIT message, the second SET 230 sends a SUPL POS message containing the assistance data to the first SET 220 (450). The first SET 220 received the SUPL POS message computes its position based on the assistance data extracted from the SUPL POS message.

After receiving the SUPL POS message, the first SET 220 sends a SUPL END message to the second SET 230 to finish the SET-TO-SET location session (460).

In the position locating method according to the second exemplary embodiment of the present invention, steps 440 and 450 (shown in FIG. 4) can be omitted. That is, in case when the first SET 220 sends the second SET 230 the SUPL STS START message (containing, for example, the SLP mode, Location ID of the first SET 220, Positioning Method, and IP and Port information) and the second SET 230 checks the SUPL STS START message and determines that it can provide the assistance data to the first SET 220, the second SET 230 performs the data connection setup (420) and then sends the SUPL STS RESPONSE message containing the assistance data (430). Upon receipt of the SUPL STS RESPONSE message, the first SET 220 calculates its position using the assistance data extracted from the SUPL STS RESPONSE message and sends the SUPL END message to the second SET 230 to finish the location session (460).

As described above, the position locating method and system using SUPL according to an exemplary embodiment of the present invention is advantageous to reduce the processing load of the SLP since the SLP sends only a SET list to the target SET.

Also, the position locating method and system using SUPL according to another exemplary embodiment of the present invention is advantageous to provide reliable location service even when the SLP is malfunctioning since the target SET can locate its position with the assistance data provided by a neighbor SET without involvement of the SLP.

Although exemplary embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims.

The above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be rendered in such software using a general purpose computer, or a special purpose computer, or a special processor, or in programmable or dedicated hardware, such as an ASIC or FPGA. As would be understood in the art, the computer, the processor or the programmable hardware includes memory components, e.g., RAM, ROM, Flash, etc. that may store or receive software or computer code that when accessed and executed by the computer, processor or hardware implement the processing methods described herein.

## Claims

1. A position locating method using Secure User Plane Location (SUPL), comprising:
receiving, at a target SUPL Enabled Terminal (SET) 130, a SET list from an SUPL Location Platform (SLP)120;
receiving an assistance data from a SET 140, selected from among SETs listed in the SET list; and
locating a position of the target SET 130 using the assistance data.

2. The position locating method of claim 1, **characterized in that** the receiving a SET list includes:
sending a SET request message to the SLP, at the target SET; and
receiving a SET list response message containing transmutability of the SET list and the SET list which is transmitted by the SLP 120 in response to the SET list request message.

3. The position locating method of claim 2, **characterized in that** the SET list request message comprises a location identifier of the target SET and a positioning method.

4. The position locating method of claim 1, **characterized in that** the SET list comprises one or moreSETs 130 which have been previously located at positions within a threshold distance from the target SET 130 and of which threshold validity time is not expired among the one or more SETs using the same positioning method as the target SET 130.

5. The position locating method of claim 1, **characterized in that** receiving an assistance data comprises:
sending an SUPL SET-TO-SET (STS) START message requesting participation in a SET-TO-SET location session to at least one of the SETs listed in the SET list;
determining, at each SET 140 that receives the SUPL STS START message, whether said each SET 140 can provide the target SET 130 with the assistance data;
performing, at a particular SET that can provide the assistance data, a data connection setup procedure; and
transmitting the assistance data from the particular SET that performed the data connection setup to the target SET.

6. The position locating method of claim 5, **characterized in that** the SUPL STS START message comprises an SLP mode, a location identifier (ID) of the target SET 130, a positioning method, an Internet Protocol (IP) information, and a port information of the target SET 130.

7. The position locating method of claim 6, **characterized in that** performing a data connection setup comprises connecting the particular SET that received the SUPL STS START message to the target SET 130 using the IP information and the port information of the target SET 130.

8. The position locating method of claim 5, further comprising:
sending a SUPL STS RESPONSE message soliciting participation in the location session from the particular SET that performed the data connection setup to the target SET 130; and
sending an SUPL STS POS INIT message indicating initiation of the location session from the particular SET that performed the data connection setup to the target SET 130.

9. A position locating method using Secure User Plane Location (SUPL), comprising:
requesting, at a target SUPL Enabled Terminal (SET) 220, at least one SET 230 to send assistant data;
receiving the assistant data from said at least one SET 220; and
locating a position of the target SET 220 based on the assistant data.

10. The position locating method of claim 9, **characterized in that** requesting by the target SET 220 said at least one SET 230 to send assistant data includes sending the at least one SET an SUPL STS START message containing an SLP mode, a location identifier (ID) of the target SET 220, a positioning method, Internet Protocol (IP) and port information.

11. The position locating method of claim 10, **characterized in that** receiving the assistant data comprises:
determining, at each particular SET 230 received the SUPL STS START message, whether or not each particular SET 230 can provide the target SET 220 with the assistant data;
performing, at the particular SET 230 that can provide the assistant data, a data connection setup procedure; and
transmitting the assistant data from the particular SET 230 that performed the data connection setup to the target SET 220.

12. The position locating method of claim 11, further comprising:
sending a SUPL STS RESPONSE message soliciting participation in the location session from the particular SET 230 that performed the data connection setup to the target SET 220; and
sending an SUPL STS POS INIT message indicating initiation of the location session from the particular SET 230 that performed the data connection setup to the target SET 220.

13. A position locating system using Secure User Plane Location (SUPL), comprising:
an SUPL Location Platform (SLP) 120 which provides a SUPL Enabled Terminal (SET) list;
a first SET 220 which sends a SET list request message, receives an assistance data from at least one SET 230 listed in the SET list, and locates a position of the first SET 220 based on the assistance data; and
a second SET 230 which performs a data connection setup to the first SET 220 and sends the assistance data to the first SET 220.

14. The position locating system of claim 13, **characterized in that** the SLP stores information on SETs 230 having positions that were previously located and creates the SET list comprising the SETs which have been located previously at positions within a threshold distance from the target SET 220 and of which threshold validity time is not expired among the SETs 230 using the same positioning method as the target SET 220.

15. A position locating system using Secure User Plane Location (SUPL), comprising:
a first SUPL Enabled Terminal (SET) 130, 220 which requests at least one SETs for assistance data, receives the assistance data, and finds a location of the first SET 130, 220 based on the assistance data; and
a second SET 140. 230 which performs a data connection setup to the first SET 130, 220 and sends the assistance data to the first SET 130, 220.
